Europäisches Patentamt

European Patent Office

Office européen des brevets

(11) Veröffentlichungsnummer: **0 084 899**
A1

# (12) EUROPÄISCHE PATENTANMELDUNG

(21) Anmeldenummer: 83200048.3

(22) Anmeldetag: 13.01.83

(51) Int. Cl.³: **B 01 D 46/00,** B 01 D 46/04

(30) Priorität: 26.01.82 NL 8200264

(43) Veröffentlichungstag der Anmeldung: 03.08.83
Patentblatt 83/31

(84) Benannte Vertragsstaaten: **AT BE CH DE FR GB IT LI NL SE**

(71) Anmelder: **AMAFILTER BV, Kwakelkade 28, Alkmaar (NL)**

(72) Erfinder: **Kleinschmidt, Leendert Antonius, Lepelaar 9, Broek op Langedijk (NL)**

(74) Vertreter: **Koomen, Jan,Ir., Kennemerstraatweg 35, NL-1814 GB Alkmaar (NL)**

(54) Vorrichtung zum aus einem Gas Ausscheiden von Teilchen, insbesondere zum aus Luft Ausscheiden von Staubteilchen.

(57) Die Vorrichtung besteht aus einem Gehäuse (2) mit einem Durchflusskanal, in dem ein Gebläse (4) aufgenommen ist, um das zu reinigende Gas wenigstens durch ein Filterelement hindurchführen, während oberhalb dieses Filterelementes eine Druckleitung (8) angebracht ist mit einer Zahl, nach dem Filterelement zu gerichteten Düsenöffnungen, mittels deren die aus der Gasströmung auf die untere Seite des Filterelementes (3) abgesetzten Teilchen davon gelöst werden können, um von einem unterliegenden Behälter (6) aufgefangen werden zu können.

EP 0 084 899 A1

ACTORUM AG

Vorrichtung zum aus einem Gas Ausscheiden von Teilchen,
insbesondere zum aus Luft Ausscheiden von Staubteilchen.


Die Erfindung betrifft eine Vorrichtung zum aus einem Gas
Ausscheiden von Teilchen, insbesondere zum aus Luft
Ausscheiden von Staubteilchen, bestehend aus einem Gehäuse
mit einem Durchflusskanal in dem ein Gebläse aufgenommen ist
für das durch wenigstens ein Filterelement hindurchführen
des zu reinigenden Gases.

Eine derartige Vorrichtung ist bekannt und bei der das
Filterelement von Zeit zu Zeit aus das Gehäuse ausgenommen
werden muss um gereinigt zu werden.
Das aus das Gehäuse Ausnehmen und ausserhalb dem Gehäuse
Reinigen des Filterelementes ist eine relativ umständliche
und zeitraubende Arbeit.

Auch ist eine Vorrichtung bekannt bei der das Filterelement
in dem Gehäuse selbst gereinigt werden kann. Diese bekannte
Vorrichtung hat den Nachteil kompliziert zu sein.

Die Erfindung beabsichtigt die Nachteile der bekannten
Vorrichtungen zu beseitigen.

Die Vorrichtung nach der Erfindung zeigt dazu das Merkmal
dass an der unteren Seite des Filterelementes ein, insbesondere
pyramide- oder kegelförmiger Behälter angeschlossen ist,
während über das Filterelement eine Druckleitung ist angebracht
mit einer Zahl, nach dem Filterelement zugerichteten
Düsenöffnungen, mittels deren, die von der Gasströmung auf die
untere Seite des Filterelementes abgesetzten Teilchen, davon
gelöst werden können um vom unterliegenden Behälter aufgefangen zu werden.

Bei einer zweckmässigen Ausführungsform der Vorrichtung
nach der Erfindung, ist die Druckleitung mit den
Düsenöffnungen über die obere Fläche des Filterelementes
um eine hauptsächlich zentrale und senkrechte Achse runddrehbar.

- 2 -

Das über die obere Fläche Runddrehen der Druckleitung kann
in unterschiedlichen Weisen stattfinden.
So könnte die Druckleitung mittels einer oder mehrerer
Zahnradübertragungen von ab ein Motor getrieben werden.
Die Luftzufuhr nach der Druckleitung würde dabei stattfinden müssen durch die unmittelbar mit der Druckleitung
verbundene senkrechte Antriebswelle.

Bei einer sehr einfachen Ausführungsform der Vorrichtung
nach der Erfindung, ist die Druckleitung mit den
Düsenöffnungen über einen hauptsächlich winkelförmigen
verlaufenden biegsamen Schlauch zur Rotation antreibbar.
Dieser biegsame Schlauch dient also sowohl zum Antrieb
der Druckleitung als zum nach diesem Druckleitung
Zuführen der erforderlichen Druckluft.

Bei einer anderen Ausführungsform der Vorrichtung nach
der Erfindung, ist die Druckleitung mit den Düsenöffnungen
über die obere Fläche des Filterelementes hin- und herbewegbar.
Beim über die obere Fläche Runddrehen oder Hin- und Herbewegen
der Druckleitung mit den nach dem Filterelement zu gerichteten
Düsenöffnungen wird immer eine beschränkte Zahl Kanäle des
Filterelementes von der Druckluft durchgeblasen um die sich
im Bereich dieser Kanäle an der unteren Seite des Filterelementes
abgesetzten Staubteilchen davon zu lösen und in den Behälter
niederfallen zu lassen.

Damit das Sauberblasen des Filterelementes so effectiv wie
möglich stattfindet sind, nach einem Merkmal der Vorrichtung
nach der Erfindung, die Düsenöffnungen für die Druckluft
angebracht in eine, die obere Fläche des Filterelementes
teilsweise abdichtende Abdeck-platte.

Bei einer weiteren Ausführungsform der Vorrichtung nach
der Erfindung ist das Filterelement an der unteren Seite
versehen mit einer Reihe, aneinander grenzender, köcherförmiger
und zusammen ein Gitter bildender Zufuhrkanäle.
Durch die Anwendung eines solches Gitters an der unteren
Seite des Filterelementes wird verhindert, dass die losgeblasenen
Staubteilchen sich teilsweise wieder sofort auf das Filterelement absetzen würden.

In günstiger Weise kann, nach einem weiteren Merkmal der Vorrichtung nach der Erfindung, oberhalb der runddrehbaren oder hin- und herbewegbaren Druckleitung ein Nachfilterelement angebracht sein.

Die Vorrichting nach der Erfindung kann in unterschiedlichen Weisen aufgebaut sein.

In zweckmässiger Weise ist, nach einem folgenden Merkmal der erfundenen Vorrichtung, ein Filterelement mit den zugehörigen Unterstützungsorganen wie eine Baueinheit in das Gehäuse einschiebbar.

Diese Baueinheit kann, nachdem sie in das Gehäuse eingeschoben worden ist, darin mittels eine Klemmvorrichtung auf eine abdichtende Unterstützung festgesetzt werden und wieder davonab gelöst werden kann.

Die Klemmvorrichtung kann in unterschiedlichen Weisen ausgeführt sein.

Bei einer günstigen Ausführungsform der Vorrichtung nach der Erfindung, wird die Klemmvorrichtung gebildet von zwei, mit Exzentern auf und ab beweglichen Profilen, die auf beiden Seiten der Baueinheit verlaufen und über die die Baueinheit in und aus das Gehäuse geschoben und auf die abdichtende Unterstützung gedrückt werden kann.

In zweckmässiger Weise können die Profile Kastenträger sein, innerhalb denen die Exzenter angebracht sind und mittels deren über die quer in Längsrichtung verlaufenden Führungen verstellbar sind, während die Kastenträger an den nach der Baueinheit zugerichteten Seiten versehen sind mit in Längsrichtung der Profile verlaufenden Schlitzen, über deren eine Begrenzungsränder die Baueinheit in und aus das Gehäuse verschiebbar ist, während die anderen Begrenzungsränder dienen als Andrückränder für das gegen die abdichtende Unterstützung Andrücken der in das Gehäuse eingeschobenen Baueinheit.

Die angewandten Filterelemente können unterschiedlich von Ausführung sein.

Insbesondere zur Entstaubung von Luft ist, nach einem letzten Merkmal der Vorrichtung nach der Erfindung, das Filterelement aufgebaut aus zusammengepressten Fasern, insbesondere aus Glasfasern, und wovon die Fasern einer äusseren Schicht zur Verengung der zwischen den Fasern vorhandenen Poren mit einer Deckschicht versehen sind.

Durch die verengten Poren zwischen den Fasern an der äusseren Schicht des Filterelementes können an diesen äusseren Schicht die Staubteilchen, oder andere festen Teilchen, mit einer Oberflächenfiltration aus der Luft oder aus dem Gas abgefangen werden, und wodurch das Zurückblasen des Filterelementes zur Entfernung der sich auf das Element abgesetzten Staubteilchen oder andere festen Teilchen erleichtert wird.

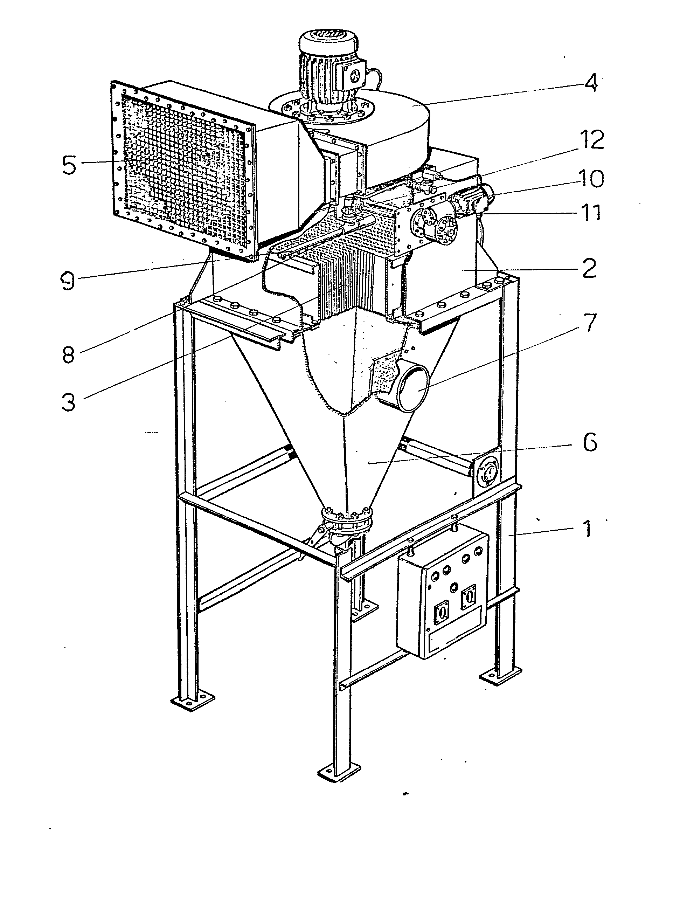

Die Erfindung wird jetzt näher erläutert werden anhand der Zeichnung eines Ausführungsbeispiels.

Wie in der Zeichnung dargestellt, wird die Vorrichtung gemäss diesem Ausführungsbeispiel gebildet durch ein Gestell 1 mit einem Gehäuse 2 in dem ein Filterelement mit einem Filtermedium von zusammengepressten Glasfasern 3 ist aufgenommen.

Auf der oberen Seite des Gehäuses ist ein Absauggebläse 4 angebracht für das von unten ab durch das Filterelement 3 hindurch ansaugen der zu reinigenden Luft, und welche durch das Gitter 5 in die Umgebung zurückgeblasen wird.

An der unteren Seite ist das Filterelement angeschlossen auf dem pyramideförmigen Auffangbehälter 6, und der versehen ist mit einer Zufuhröffnung 7 für die zu reinigende oder zu entstaubene Umgebungsluft.

Über die obene Seite des Filterelementes 3 ist die Druckleitung 8 mit der Ausflussöffnung 9 angebracht, und welche mittels des Elektromotors 10 über die Winkelübertragungen 11 und 12 rundgedreht werden können für das vonab das Filterelement nach unten zu Zurückblasen der sich auf das Filterelement abgesetzten Staubteilchen.

Die vom Filterelement losgeblasenen Staubteilchen werden aufgefangen vom Behälter 6 um von dort wieder über das Ventil 13 abgeführt zu werden.

PATENTANSPRÜCHE

1. Vorrichtung zum aus einem Gas Ausscheiden von Teilchen, insbesondere zum aus Luft Ausscheiden von Staubteilchen bestehend aus einemGehäuse mit einem Durchflusskanal in dem ein Gebläse aufgenommen ist für das durch wenigstens ein Filterelement hindurchführen des zu reinigenden Gases, dadurch gekennzeichnet, dass an der unteren Seite des Filterelementes ein, insbesondere pyramide- oder kegelförmiger Behälter angeschlossen ist, während über das Filterelement eine Druckleitung ist angebracht mit einer Zahl, nach dem Filterelement zu gerichteten Düsenöffnungen, mittels deren, die vonaus der Gasströmung auf die untere Seite des Filterelementes abgesetzten Teilchen, davon gelöst werden können, um von unterliegenden Behälter aufgefangen zu werden.

2. Vorrichtung nach Anspruch 1, dadurch gekennzeichnet, dass die Druckleitung mit den Düsenöffnungen über die obere Fläche des Filterelementes um eine hauptsächlich zentrale und senkrechte Achse runddrehbar ist.

3. Vorrichtung nach Anspruch 2, dadurch gekennzeichnet, dass die Druckleitung mit den Düsenöffnungen über einen hauptsächlich winkelförmigen verlaufenden biegsamen Schlauch zu in Rotation antreibbar ist.

4. Vorrichtung nach Anspruch 1, dadurch gekennzeichnet, dass die Druckleitung mit den Düsenöffnungen über die obere Fläche des Filterelementes hin-und herbewegbar ist.

5. Vorrichtung nach Anspruch 2 oder 3, dadurch gekennzeichnet, dass die Düsenöffnungen sind angebracht in eine, die obere Fläche des Filterelementes teilsweise abdichtende Abdeckplatte.

6. Vorrichtung nach Anspruch 1, 2 oder 3, dadurch gekennzeichnet, dass das Filterelement an der unteren Seite ist versehen mit einer Reihe an einander grenzender, köcherförmiger

- 2 -

und zusammen ein Gitter bildender Zufuhrkanäle.

7. Vorrichtung nach einem der vorangehenden Ansprüche, dadurch gekennzeichnet, dass oberhalb der Druckleitung ein Nachfilterelement angebracht ist.

8. Vorrichtung nach einem der vorangehenden Ansprüche, dadurch gekennzeichnet, dass ein Filterelement mit den zugehörigen Unterstützungsorganen wie eine Baueinheit in das Gehäuse einschiebbar ist.

9. Vorrichtung nach Anspruch 8, dadurch gekennzeichnet, dass jede Baueinheit nachdem sie in das Gehäuse eingeschoben worden ist, darin mittels eine Klemmvorrichtung auf eine abdichtende Unterstützung fest gesetzt werden und wieder davon ab gelöst werden kann.

10. Vorrichtung nach Anspruch 9, dadurch gekennzeichnet, dass die Klemmvorrichtung gebildet wird von zwei, mit Exzentern auf und ab beweglichen Profilen, die auf beiden Seiten der Baueinheit verlaufen, und über die die Baueinheit in und aus das Gehäuse geschoben und auf die abdichtende Unterstützung gedrückt werden kann.

11. Vorrichtung nach Anspruch 10, dadurch gekennzeichnet, dass die Profilen Kastenträger sind, innerhalb denen die Exzenter angebracht sind und mittels deren über die quer in Längsrichtung verlaufenden Führungen verstellbar sind, während die Kastenträger an den nach der Baueinheit zu gerichteten Seiten versehen sind mit in Längsrichtung der Profilen verlaufenden Schlitzen, über deren eine Begrenzungsränder die Baueinheit in und aus das Gehäuse verschiebbar ist, während die anderen Begrenzungsränder dienen als Andruckränder für das gegen die abdichtende Unterstützung Andrücken der in das Gehäuse eingeschobenen Baueinheit.

12. Vorrichtung nach einem der vorangehenden Ansprüche, dadurch gekennzeichnet, dass das Filterelement aufgebaut ist

0084899

aus zusammengepressten Fasern, insbesondere Glasfasern,
von denen die Fasern einer äusseren Schicht zur Verengung
der zwischen den Fasern vorhandenen Poren mit einer
Deckschicht versehen sind.

4

12

10

11

5

9

8

3

2

7

6

1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 277 260 (J.H. BROWNING) * Abbildung 3; Spalte 3, Zeile 48 - Spalte 5, Zeile 8 * | 1 | B 01 D 46/00 B 01 D 46/04 |
| A | US-A-4 157 899 (B.M. WHEATON) * Abbildung 7; Spalte 3, Zeilen 34-58 * | 2 | |
| A | US-A-4 293 320 (J.W. ROBINSON) * Abbildung 3; Spalte 4, Zeile 62 - Spalte 5, Zeile 31 * | 4 | |
| A | US-A-4 203 738 (K.C. KERMAN) | | |
| A | US-A-3 395 900 (G.W. MEEK) | | RECHERCHIERTE SACHGEBIETE (Int. Cl. 3) |
| | | | B 01 D |

Der vorliegende Recherchenbericht wurde für alle Patentansprüche erstellt.

| Recherchenort | Abschlußdatum der Recherche | Prüfer |
|---|---|---|
| DEN HAAG | 02-05-1983 | BOGAERTS M.L.M. |